# EUROPEAN PATENT APPLICATION

(11) **EP 4 700 908 A1**
(43) Date of publication of application: **25.02.2026**
(21) Application number: 25178703.2
(22) Date of filing: 26.05.2025
(51) Int. Cl.: H01M 10/60

(54) **SECONDARY BATTERY MODULE**

(30) Priority: 30.07.2024 KR 20240101292
(71) Applicant: Samsung SDI Co., Ltd, Gyeonggi-do 17084 (KR)
(72) Inventor: NA, Donju, 17084 Yongin-Si Gyeonggi-do (KR)
(74) Representative: Gulde & Partner

(57) **Abstract**

A secondary battery module includes two cell stacks, each of the two cell stacks including a plurality of unit cells, the plurality of unit cells arranged along a first direction, a cooling plate between the two cell stacks, and a housing configured to accommodate the two cell stacks and the cooling plate, wherein the cooling plate includes a coolant inlet and a coolant outlet on a first side surface of the cooling plate.

## Description

### BACKGROUND

### 1. Field

Aspects of embodiments of the present disclosure relate to a secondary battery module.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Batteries in which an energy density is high (an amount of energy that may be stored per unit weight or unit volume is large) may provide longer execution times or longer mileage in portable devices or electric vehicles. Therefore, the energy density of secondary batteries may be one of the important factors that determine the performance of the secondary batteries.

The above information disclosed in this Background section is for enhancement of understanding of the background of the present disclosure, and therefore, it may contain information that does not constitute related (or prior) art.

### SUMMARY

Embodiments of the present disclosure relate to a secondary battery module including at least two (e.g. two) cell stacks, each of the cell stacks including a plurality of unit cells, the plurality of unit cells arranged along a first direction, at least one cooling plate between the at least two (adjacent) cell stacks, and a housing configured to accommodate the at least two cell stacks and the cooling plate, wherein the cooling plate includes a coolant inlet and a coolant outlet on a first side surface of the cooling plate.

The coolant inlet may be above the coolant outlet on the first side surface of the cooling plate.

The cooling plate may further include a partition wall (partially) separating an inner space of the cooling plate. In other words, the cooling plate may further include a partition wall, which divides an inner space of the cooling plate into two sub-spaces connected for through-flow. The cooling plate may further include a plurality of partition walls, which divide an inner space of the cooling plate into two or more sub-spaces connected for through-flow.

One end of the partition wall may be coupled to the first side surface, and another end opposite to the one end of the partition wall may be spaced apart from a second side surface of the cooling plate, the second side surface of the cooling plate being opposite to the first side surface.

A third side surface of the cooling plate, which is perpendicular to the first side surface, and a fourth side surface of the cooling plate, which is perpendicular to the first side surface and opposite to the third side surface, each having an uneven shape.

The secondary battery module may further include a gap filler on the third side surface and the fourth side surface.

A size of a side surface area of each of the plurality of unit cells is equal to or greater than a size of a bottom surface area of each of the plurality of unit cells.

Each of the plurality of unit cells may include lithium iron phosphate.

The housing may include an end plate connected to the cooling plate, the end plate supporting a first surface along a second direction crossing the first direction of the two cell stacks, and a front plate connected to the cooling plate, the front plate supporting a second surface opposite to the first surface of the two cell stacks, wherein each of the end plate and the front plate has a groove therein to accommodate at least a portion of the cooling plate.

The housing may further include a top plate connected to the cooling plate, the top plate supporting a third surface along a third direction crossing the first direction of the two cell stacks, and a bottom plate connected to the cooling plate, the bottom plate supporting a fourth surface opposite to the third surface of the two cell stacks, wherein each of the top plate and the bottom plate may have a groove therein to accommodate at least a portion of the cooling plate.

Embodiments include a secondary battery module, including a plurality (e.g. four) of cell stacks, each of the plurality of cell stacks comprising a plurality of unit cells arranged along a first direction and a second direction crossing the first direction, at least one cooling plate interposed between at least two cell stacks among the plurality of cell stacks, and a housing accommodating the plurality of cell stacks and the cooling plate, wherein the cooling plate includes a coolant inlet and a coolant outlet on a first side surface of the cooling plate.

The coolant inlet may be above the coolant outlet on the first side surface of the cooling plate.

The cooling plate may further include a partition wall separating an inner space of the cooling plate.

One end of the partition wall may be coupled to the first side surface, and another end opposite to the one end of the partition wall may be spaced apart from a second side surface opposite to the first side surface.

A third side surface of the cooling plate, the third side surface being perpendicular to the first side surface, and a fourth side surface of the cooling plate, the fourth side surface being perpendicular to the first side surface and opposite to the third side surface, have an uneven shape.

The secondary battery module may further include a gap filler on the third side surface and the fourth side surface.

A size of a side surface area of each of the plurality of unit cells may be equal to or greater than a size of a bottom surface area of each of the plurality of unit cells.

Each of the plurality of unit cells may include lithium iron phosphate.

The housing may include an end plate connected to the cooling plate, the end plate supporting a first surface along a second direction of the plurality of cell stacks, and a front plate connected to the cooling plate, the front plate supporting a second surface opposite to the first surface of the plurality of cell stacks, wherein each of the end plate and the front plate may have a groove therein to accommodate at least a portion of the cooling plate.

The housing may further include a top plate connected to the cooling plate, the top plate supporting a third surface along a third direction of the plurality of cell stacks, and a bottom plate connected to the cooling plate, the bottom plate supporting a fourth surface opposite to the third surface of the plurality of cell stacks, wherein each of the top plate and the bottom plate may have a groove therein to accommodate at least a portion of the cooling plate.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view showing a secondary battery module according to one or more embodiments of the present disclosure.
FIG. 2 illustrates an exploded perspective view showing the secondary battery module according to one or more embodiments of the present disclosure.
FIG. 3 illustrates a cross-sectional view taken along line A-A' of FIG. 1 according to one or more embodiments of the present disclosure.
FIG. 4 illustrates a cross-sectional view taken along line B-B' of FIG. 1 according to one or more embodiments of the present disclosure.
FIG. 5 illustrates a perspective view showing a cooling plate according to one or more embodiments of the present disclosure.
FIG. 6 illustrates a cross-sectional view taken along line C-C' of FIG. 5 according to one or more embodiments of the present disclosure.
FIG. 7 illustrates a cross-sectional view taken along line C-C' of FIG. 5 according to another embodiment of the present disclosure.
FIG. 8 illustrates an example of a secondary battery module according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present specification, the singular forms as used herein include the plural forms, unless the context clearly specifies the singular forms. In addition, the plural forms as used herein include the singular forms, unless the context clearly specifies the plural forms. It will be understood that the terms "comprise," "include," or "have" as used herein specify the presence of stated elements, but do not preclude the presence or addition of one or more other elements.

In the present disclosure, the sizes and relative sizes of layers and regions shown in the drawings may be exaggerated for clarity of explanation. That is, the sizes shown in the drawings are only for convenience of understanding and are not limited thereto. In addition, the same reference numerals denote the same elements throughout the specification.

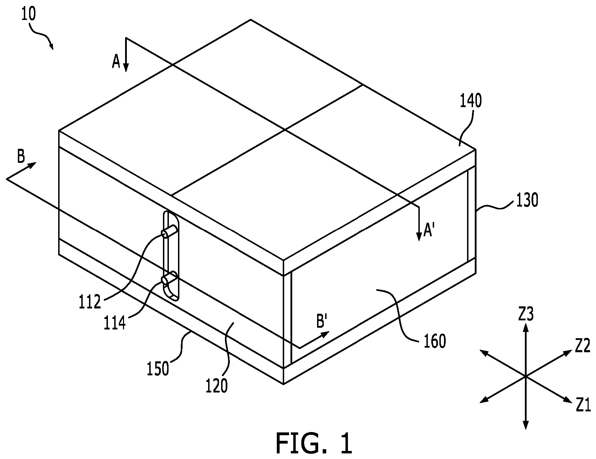

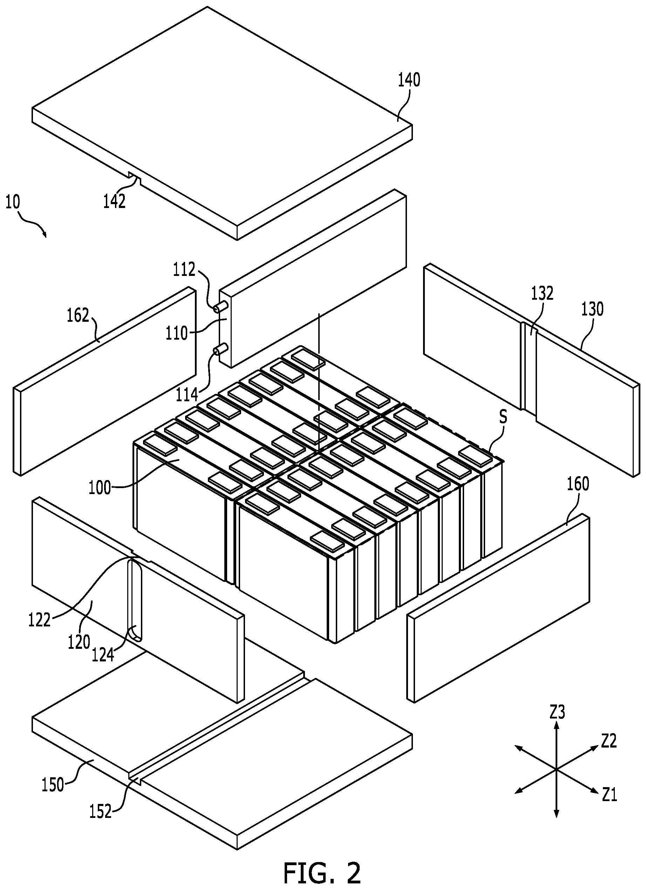

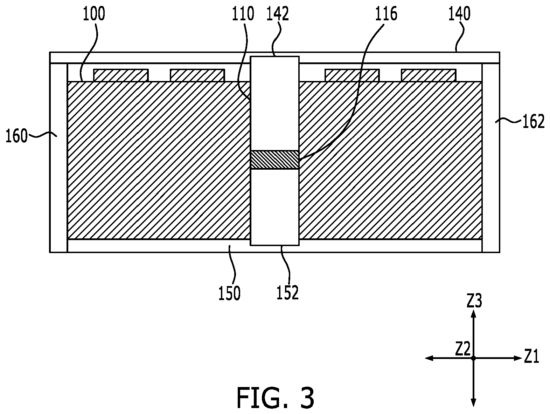

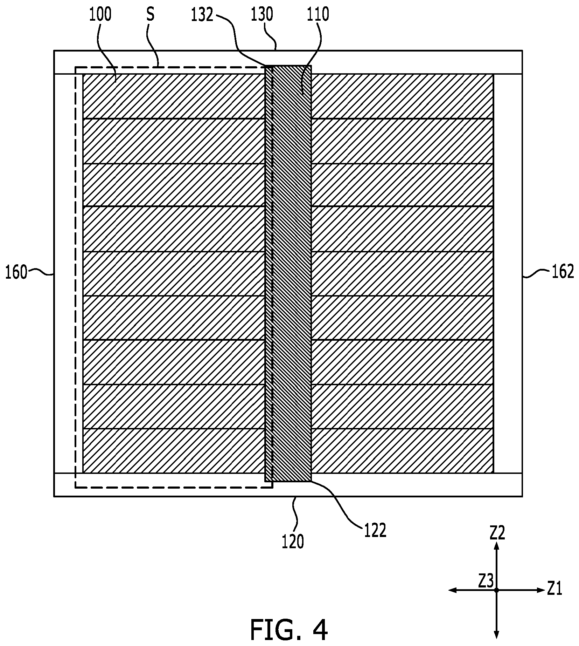

FIG. 1 illustrates a perspective view showing a secondary battery module 10 according to one or more embodiments of the present disclosure. FIG. 2 illustrates an exploded perspective view showing the secondary battery module 10 according to one or more embodiments of the present disclosure. FIG. 3 illustrates a cross-sectional view taken along line A-A' of FIG. 1 according to one or more embodiments of the present disclosure. FIG. 4 illustrates a cross-sectional view taken along line B-B' of FIG. 1 according to one or more embodiments of the present disclosure.

Referring to FIGS. 1 and 2, the secondary battery module 10 according to one or more embodiments of the present disclosure may include a plurality of unit cells 100, two cell stacks S arranged along a first direction (e.g., a Z1-axis direction in the drawings), a cooling plate 110 arranged between the two cell stacks S, and a housing that accommodates the two cell stacks S and the cooling plate 110. The arrangement of the cooling plate between the at least two cell stacks allows efficient cooling even for large battery cells, in terms of height-direction (Z3-axis direction in the drawings).

In one or more embodiments, the housing may include an end plate 130 connected to the cooling plate 110 and supporting a first surface along a second direction (e.g., a Z2-axis direction in the drawings) crossing the first direction in which the two cell stacks S are arranged, and a front plate 120 connected to the cooling plate 110 and supporting a second surface opposite to the first surface of the two cell stacks S. In other words, the afore-mentioned end plate 130 contacts the outermost first surface of the outermost cell of the cell stack in a second direction (e.g., a Z2-axis direction in the drawings), and afore-mentioned front plate 120 contacts the outermost second surface of the outermost cell on the opposite side of the cell stack in a second direction. That is, the front plate 120 may face the first side surface of the cooling plate 110, and the end plate 130 faces the second side surface of the cooling plate 110. As illustrated in FIG. 4, the end plate 130 and the front plate 120 may respectively have groove 132 and groove 122 formed to accommodate at least a portion of the cooling plate 110. Such grooves may securely lock the cooling plate 110 in the housing. In addition, a passage 124 through which a coolant inlet 112 and a coolant outlet 114 pass may be formed in the front plate 120. In other words, the front plate 120 may comprise a passage 124 (e.g. at least one through hole, preferably two through holes) formed to accommodate (let pass through) the coolant inlet 112 and the coolant outlet 114.

Additionally, the housing may include a top plate 140 connected to the cooling plate 110 and supporting a third surface along a third direction (e.g., a Z3-axis direction in the drawings) crossing the first direction of the two cell stacks S, and a bottom plate 150 connected to the cooling plate 110 and supporting a fourth surface opposite to the third surface of the two cell stacks S. As illustrated in FIG. 3, the top plate 140 and the bottom plate 150 may respectively have groove 142 and 152 formed to accommodate at least a portion of the cooling plate 110. Such grooves may further secure the position of the cooling plate 110 within the housing.

In one or more embodiments, the cooling plate 110 may accommodate a coolant that circulates within the cooling plate 110 so as to cool the unit cells 100. The coolant inlet 112 through which the coolant is introduced may be formed on the first side surface along the second direction of the cooling plate 110. In addition, the coolant outlet 114 through which the coolant is discharged may be formed on the first side surface along the second direction of the cooling plate 110. In FIGS. 1 and 2, the shapes of the coolant inlet 112 and the coolant outlet 114 are illustrated as cylindrical, shapes of the coolant inlet 112 and the coolant outlet 114 may be a cuboid or other shapes, unlike those illustrated in FIGS. 1 and 2.

In one or more embodiments, the coolant inlet 112 may be formed above the coolant outlet 114. Through this configuration, the coolant introduced into the cooling plate 110 through the coolant inlet 112 may circulate inside the cooling plate 110, may cool the unit cells 100, may descend due to the influence of gravity, and then, may be discharged through the coolant outlet 114.

In one or more embodiments, the size of the side surface area of each of the unit cells 100 may be equal to or greater than the size of the bottom surface area of each of the unit cells 100. That is, each of the unit cells 100 may have a length in the height direction greater than or equal to the length in the width direction. Referring to FIGS. 1 to 4, the cooling plate 110 may have a plate shape that extends in the second direction and may be interposed between the two cell stacks S. Accordingly, the long side of the cooling plate 110 and the short side of each of the unit cells 100 may be arranged to face each other. That is, a side cooling method may be applied to the secondary battery module 10 according to one or more embodiments of the present disclosure. Through this configuration, cooling of the unit cells 100 may be effectively achieved even in a case where the height of each of the unit cells 100 increases (e.g., larger unit cells may be employed).

In one or more embodiments, each of the unit cells 100 may include lithium iron phosphate (LFP). A cell including lithium iron phosphate may have a characteristic in which the length in the height direction is longer than the length in the width direction. Therefore, the secondary battery module 10 according to one or more embodiments of the present disclosure may improve cooling efficiency by applying the side cooling method.

In one or more embodiments, the unit cells 100 may be electrically and/or mechanically connected to each another. For example, the unit cells 100 may be electrically connected through a bus bar disposed on the upper end of the secondary battery module 10. According to one or more embodiments, an insulating member is interposed between the unit cells 100 included in each cell stack S, and thus, the unit cells 100 may be electrically insulated from each other through a portion excluding the bus bar. Additionally or alternatively, insulating members and/or spacers may be interposed between the unit cells 100 included in each cell stack S.

In one or more embodiments, the end plate 130 may have a plate shape elongated in the first direction and may be connected to the side plates 160 and 162, the top plate 140, and the bottom plate 150. As illustrated in FIG. 4, a groove may be formed in the central portion of the end plate 130 to accommodate the cooling plate 110. As the cooling plate 110 is seated in the groove of the end plate 130, the cooling plate 110 may be stably fixed.

In one or more embodiments, the front plate 120 may have a plate shape elongated in the first direction and may be connected to the side plates 160 and 162, the top plate 140, and the bottom plate 150. As illustrated in FIG. 4, a groove may be formed in the central portion of the front plate 120 so as to accommodate the cooling plate 110. As the cooling plate 110 is seated in the groove of the front plate 120, the cooling plate 110 may be stably fixed. In addition, as illustrated in FIGS. 1 and 2, a passage through which the coolant inlet 112 and the coolant outlet 114 pass may be formed in the front plate 120.

In one or more embodiments, the bottom plate 150 may have a plate shape elongated in the first direction and may be connected to the side plates 160 and 162, the front plate 120, and the end plate 130. As illustrated in FIG. 3, a groove may be formed in the central portion of the bottom plate 150 to accommodate the cooling plate 110. As the cooling plate 110 is seated in the groove of the bottom plate 150, the cooling plate 110 may be stably fixed.

In one or more embodiments, the top plate 140 may have a plate shape elongated in the first direction and may be connected to the side plates 160 and 162, the front plate 120, and the end plate 130. As illustrated in FIG. 3, a groove may be formed in the central portion of the top plate 140 so as to accommodate the cooling plate 110. As the cooling plate 110 is seated in the groove of the top plate 140, the cooling plate 110 may be stably fixed.

According to one or more embodiments, at least two of a plurality of plates 110, 120, 130, 140, 150, 160, and 162 may be connected by welding. For example, opposite ends of the front plate 120 and one end of each of the side plates 160 and 162 may be connected by welding. Additionally, opposite ends of the end plate 130 and the other end of each of the side plate 160 and 162 may be connected by welding. In another embodiment, at least two of the plates 110, 120, 130, 140, 150, 160, and 162 may be connected by a mechanical fastening method (e.g., bolt fastening, adhesive fastening, etc.) in addition to or alternatively by welding.

In one or more embodiments, the cooling plate 110 may include a partition wall 116 that separates the inner space of the cooling plate 110. As illustrated in FIG. 3, the inner space of the cooling plate 110 may be separated by the partition wall 116. The upper space of the inner space separated by the partition wall 116 may be a space in which the coolant introduced from the coolant inlet 112 circulates. The lower space of the inner space separated by the partition wall 116 may be a space through which the coolant passes to be discharged to the coolant outlet 114. Upper space and lower space are connected to allow a through-flow of the coolant.

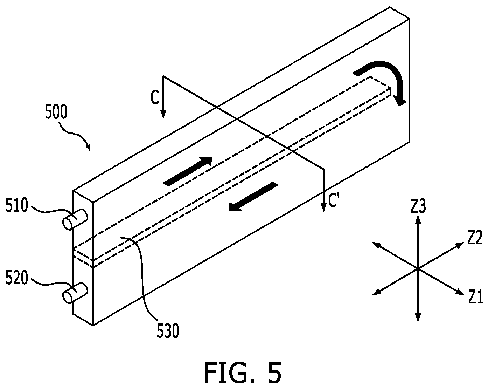

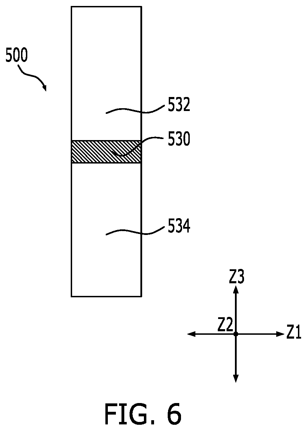

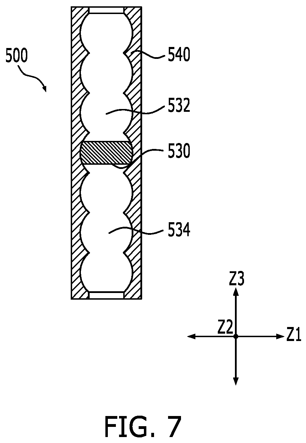

FIG. 5 illustrates a perspective view showing a cooling plate 500 according to one or more embodiments of the present disclosure. FIG. 6 illustrates a cross-sectional view taken along line C-C' of FIG. 5 according to one or more embodiments of the present disclosure. FIG. 7 illustrates a cross-sectional view taken along line C-C' of FIG. 5 according to another embodiment of the present disclosure.

As illustrated, the cooling plate 500 may include a coolant inlet 510 and a coolant outlet 520 formed on a first side surface of the cooling plate 500.

In one or more embodiments, the cooling plate 500 may accommodate a coolant that circulates within the cooling plate 500 to cool a plurality of unit cells. The coolant inlet 510 through which the coolant is introduced may be formed on the first side surface along the second direction (e.g., the Z2 direction in the drawings) of the cooling plate 500. In addition, the coolant outlet 520 through which the coolant is discharged may be formed on the first side surface along the second direction of the cooling plate 500. In FIG. 5, the shapes of the coolant inlet 510 and the coolant outlet 520 are illustrated as cylindrical, however, the shapes of the coolant inlet 510 and the coolant outlet 520 may be a cuboid or other shapes, unlike that illustrated in FIG. 5.

In one or more embodiments, the coolant inlet 510 may be formed above the coolant outlet 520. Through this configuration, the coolant introduced into the cooling plate 500 through the coolant inlet 510 may circulate inside the cooling plate 500, may cool the unit cells, may descend due to the influence of gravity, and then, may be discharged through the coolant outlet 520.

In one or more embodiments, the cooling plate 500 may include a partition wall 530 that separates (e.g., partitions) the inner space of the cooling plate 500. As illustrated in FIG. 5, the inner space of the cooling plate 500 may be separated by the partition wall 530. The upper space of the inner space separated by the partition wall 530 may be a space in which the coolant introduced from the coolant inlet 510 circulates. The lower space of the inner space separated by the partition wall 530 may be a space through which the coolant passes to be discharged to the coolant outlet 520. By installing the partition wall 530 within the cooling plate 500, a passage (e.g., in the direction of the arrow in FIG. 5) through which the coolant circulates within the cooling plate 500 may be provided.

In one or more embodiments, one end of the partition wall 530 may be coupled to the first side surface of the cooling plate 500, and the other end of the partition wall 530, which is opposite to the one end, may be spaced apart from the second side surface of the cooling plate 500, which is opposite to the first surface. The first side surface of the cooling plate 500 may be the side surface where the coolant inlet 510 and the coolant outlet 520 are formed. Because one end of the partition wall 530 is coupled to the first side surface of the cooling plate 500, the coolant introduced into the upper space within the cooling plate 500 through the coolant inlet 510 may proceed in a substantially horizontal direction (e.g., in the Z2 direction) until the coolant approaches the second side surface of the cooling plate 500 without falling into the lower space. In addition, because the other end of the partition wall 530 is spaced apart from the second side surface of the cooling plate 500, the coolant that flows into the upper space within the cooling plate 500 through the coolant inlet 510 may fall into the lower space only in a case where the coolant reaches the second side surface of the cooling plate 500. Through the configuration in which one end of the partition wall 530 is connected to the first side surface of the cooling plate 500 and the other end of the partition wall 530 is spaced apart from the second side surface of the cooling plate 500, a passage through which the coolant circulates may be provided. As the coolant that has a low temperature and is introduced through the coolant inlet 510, it does not mix with the coolant that has a high temperature and is circulated through the cooling plate 500, cooling by the cooling plate 500 may be effectively achieved.

Referring to FIG. 6, the cross-sectional view taken along line C-C' of FIG. 5 according to one or more embodiments of the present disclosure may be provided. As illustrated, the cooling plate 500 may be separated into an upper space 532 and a lower space 534 through the partition wall 530 installed inside the cooling plate 500. The upper space 532 may be a space in which the coolant introduced from the coolant inlet 510 circulates, and the lower space 534 may be a space in which the coolant having passed through the upper space 532 passes to be discharged to the coolant outlet 520.

As illustrated in FIG. 6, the cross-section of the cooling plate 500 may have a rectangular shape in which a height is longer than a width. That is, the cooling plate 500 may have a shape in the form of a narrow plate that is erected vertically. Through this configuration, in a case where the cooling plate 500 is interposed between the cell stacks, the proportion of space occupied by the cooling plate 500 within the secondary battery module may be minimized. In addition, by minimizing the proportion of space occupied by the cooling plate 500 within the secondary battery module, the energy density of the secondary battery module may be improved.

Referring to FIG. 7, the cross-sectional view taken along line C-C' of FIG. 5 according to another embodiment of the present disclosure may be provided. As illustrated, the cooling plate 500 may be separated into an upper space 532 and a lower space 534 through the partition wall 530 installed inside the cooling plate 500. The upper space 532 may be a space in which the coolant introduced from the coolant inlet 510 circulates, and the lower space 534 may be a space in which the coolant having passed through the upper space 532 passes to be discharged to the coolant outlet 520.

As illustrated in FIG. 7, a gap filler 540 may be applied on opposite side surfaces along the first direction (e.g., the Z1 direction in the drawing, e.g. the third and fourth side surface) crossing the second direction of the cooling plate. The gap filler 540 may be applied between the battery cell adjacent to the cooling plate 500 and the sidewall (e.g. the third side surface) of the cooling plate 500. The gap filler 540 may include a material having high thermal conductivity or a thermal interface material. Heat exchange between the battery cell and the cooling plate 500 may be effectively achieved by the gap filler 540, and the cooling efficiency of the cooling plate 500 may be improved.

In addition, the gap filler 540 may include a material having adhesive properties. That is, the gap filler 540 may include or consists of a heat-conductive and adhesive material. The gap filler 540 may be disposed on the side surface (e.g. third side surface) of the cooling plate 500, directly contacting the side surface (e.g. third side surface) and at least a part of the battery cell stack. In this way, the gap filler 540 may be disposed on both opposite side surfaces (e.g. third and fourth side surfaces) of the cooling plate 500 and directly contacting at least a part of the corresponding battery cell stack. By applying the gap filler 540 having adhesive strength between the cooling plate 500 and the battery cell, the cooling plate 500 and the battery cell may be in close contact with each other. By bonding the battery cell to the cooling plate 500 as described above, heat exchange between the battery cell and the cooling plate 500 may be effectively achieved and the cooling efficiency of the cooling plate 500 may be improved.

Referring to FIG. 7, opposite side surfaces of the cooling plate 500 along the first direction (e.g., the Z1 direction in the drawing) may be formed in an embossing (or uneven) shape. Because opposite side surfaces of the cooling plate 500 are formed in an embossed shapeit may be prevented that the gap filler 540, which is applied on opposite side surfaces of the cooling plate 500, flows down. In addition, as opposite side surfaces of the cooling plate 500 are formed in an embossing shape, the contact area (or contact surface area) between the battery cell and the cooling plate 500 may be expanded, and thus, the cooling area and cooling efficiency of the cooling plate 500 may be increased.

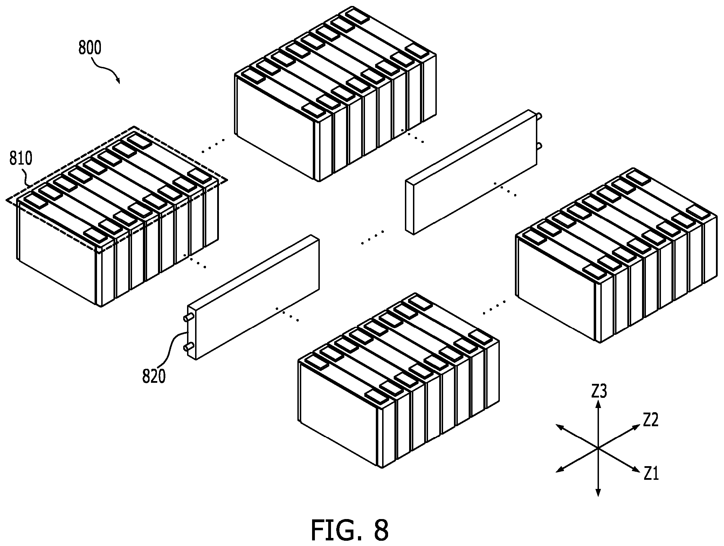

FIG. 8 illustrates a diagram showing an example of a secondary battery module 800 according to one or more embodiments of the present disclosure. As illustrated, the secondary battery module 800 may include a plurality of cell stacks 810, each including a plurality of unit cells, arranged in the first direction (e.g., the Z1 direction in the drawing) and the second direction (e.g., the Z2 direction in the drawing) crossing the first direction, at least one cooling plate 820 arranged to be interposed between at least two cell stacks among the cell stacks 810, and a housing that accommodates the at least two cell stacks and a cooling plate 110.

In one or more embodiments, the housing may include an end plate connected to the cooling plate 820 and supporting a first surface along the second direction (e.g., the Z2-axis direction in the drawing) crossing the first direction of the two cell stacks, and a front plate connected to the cooling plate 820 and supporting a second surface opposite to the first surface of the two cell stacks S. A groove may be formed in each of the end plate and the front plate to accommodate the cooling plate 820. In addition, the front plate may be formed with a passage through which a coolant inlet and a coolant outlet pass.

In one or more embodiments, the housing may include a top plate connected to the cooling plate 820 and supporting a third surface along the third direction (e.g., the Z3-axis direction in the drawing) crossing the first direction of the two cell stacks, and a bottom plate connected to the cooling plate 820 and supporting a fourth surface opposite to the third surface of the two cell stacks S. A groove may be formed in each of the top plate and the bottom plate to accommodate the cooling plate 820.

In one or more embodiments, the cooling plate 820 may accommodate a coolant that circulates within the cooling plate 820 to cool a plurality of unit cells. The coolant inlet through which the coolant is introduced may be formed on the first side surface along the second direction of the cooling plate 820. In addition, the coolant outlet through which the coolant is discharged may be formed on the first side surface along the second direction of the cooling plate 820.

In one or more embodiments, the coolant inlet may be formed above the coolant outlet. Through this configuration, the coolant introduced into the cooling plate 820 through the coolant inlet may circulate inside the cooling plate 820, may cool the unit cells, may descend due to the influence of gravity, and then, may be discharged through the coolant outlet.

In one or more embodiments, the size of the side surface area of each of the unit cells may be equal to or greater than the size of the bottom surface area of each of the unit cells.

In one or more embodiments, each of the unit cells may include lithium iron phosphate (LFP).

In one or more embodiments, the cooling plate 820 may include a partition wall that separates the inner space of the cooling plate 820.

In one or more embodiments, one end of the partition wall may be coupled to the first side surface of the cooling plate 820, and the other end of the partition wall, which is opposite to the one end, may be spaced apart from the second side surface of the cooling plate 820, which is opposite to the first side surface.

In one or more embodiments, a gap filler may be applied on opposite side surfaces along the first direction (e.g., the Z1 direction in the drawing) crossing the second direction of the cooling plate 820.

In one or more embodiments, opposite side surfaces of the cooling plate 820 along the first direction may be formed in an embossed shape.

With the development of secondary battery technology, it is desirable to maintain the performance of secondary batteries through thermal management of secondary batteries. Especially for prismatic aluminum case batteries, efficient thermal management is important to maintain battery stability, performance, and long-term reliability. A conventional thermal management method mainly performs cooling by installing a liquid cooling plate at the bottom of a cell. In such a method, effective cooling may not be performed as the height of the cell increases. As the weight of the cell increases, it is necessary to increase the thickness of the cooling plate. Accordingly, the energy density of the secondary battery may be worsened.

According to one or more embodiments, the housing may include: an end plate connected to the cooling plate and supporting a first surface along a second direction crossing the first direction of the two cell stacks; and a front plate connected to the cooling plate and supporting a second surface opposite to the first surface of the two cell stacks, wherein each of the end plate and the front plate may have a groove formed therein so as to accommodate at least a portion of the cooling plate.

According to one or more embodiments, the housing may further include: a top plate connected to the cooling plate and supporting a third surface along a third direction crossing the first direction of the two cell stacks; and a bottom plate connected to the cooling plate and supporting a fourth surface opposite to the third surface of the two cell stacks, wherein each of the top plate and the bottom plate may have a groove formed therein so as to accommodate at least a portion of the cooling plate.

A secondary battery module according to another embodiment of the present disclosure may include: a plurality of cell stacks each including a plurality of unit cells and arranged along a first direction and a second direction crossing the first direction; at least one cooling plate arranged to be interposed between at least two cell stacks among the plurality of cell stacks; and a housing accommodating the plurality of cell stacks and the cooling plate, wherein the cooling plate may include a coolant inlet and a coolant outlet formed on a first side surface of the cooling plate.

According to one or more embodiments, the coolant inlet may be formed above the coolant outlet on the first side surface of the cooling plate.

According to one or more embodiments, the cooling plate may include a partition wall separating an inner space of the cooling plate.

According to one or more embodiments, one end of the partition wall may be coupled to the first side surface, and another end opposite to the one end of the partition wall may be spaced apart from a second side surface opposite to the first side surface. The cooling plate may further include a plurality of partition walls, which divide an inner space of the cooling plate into two or more sub-spaces connected for through-flow. The plurality of partition walls may be alternately coupled to the first side surface and second side surface and may respectively be alternately spaced apart from a second side surface and first side surface. Thus, the plurality of partition walls may provide a longer flow path with alternating flow direction for the coolant within the cooling plate, which may increase the cooling efficiency of the cooling plate.

According to one or more embodiments, a third side surface of the cooling plate, which is perpendicular to the first side surface, and a fourth side surface of the cooling plate, which is perpendicular to the first side surface and opposite to the third side surface, may be formed in an embossed shape.

According to one or more embodiments, the secondary battery module may further include a gap filler applied on the third side surface and the fourth side surface.

According to one or more embodiments, a size of a side surface area of each of the plurality of unit cells may be equal to or greater than a size of a bottom surface area of each of the plurality of unit cells.

According to one or more embodiments, each of the plurality of unit cells may include lithium iron phosphate (LFP).

According to one or more embodiments, the housing may include: an end plate connected to the cooling plate and supporting a first surface along a second direction of the plurality of cell stacks; and a front plate connected to the cooling plate and supporting a second surface opposite to the first surface of the plurality of cell stacks, and each of the end plate and the front plate may have a groove formed therein so as to accommodate at least a portion of the cooling plate.

According to one or more embodiments, the housing may further include: a top plate connected to the cooling plate and supporting a third surface along a third direction of the plurality of cell stacks; and a bottom plate connected to the cooling plate and supporting a fourth surface opposite to the third surface of the plurality of cell stacks, and each of the top plate and the bottom plate may have a groove formed therein so as to accommodate at least a portion of the cooling plate.

A side cooling method may be applied to the secondary battery module according to one or more embodiments of the present disclosure. Through this configuration, cooling of the unit cells may be effectively achieved even in a case where the height of each of the unit cells increases.

Therefore, the secondary battery module according to one or more embodiments of the present disclosure may improve cooling efficiency by applying the side cooling method.

In one or more embodiments, the coolant inlet may be formed above the coolant outlet. Through this configuration, the coolant introduced into the cooling plate through the coolant inlet may circulate inside the cooling plate, may cool the unit cells, may descend due to the influence of gravity, and then, may be discharged through the coolant outlet.

In one or more embodiments, the cooling plate may be stably fixed by being seated in the groove formed in each of the front plate, the end plate, the top plate, and the bottom plate.

In one or more embodiments, through the configuration in which one end of the partition wall is connected to the first side surface of the cooling plate and the other end of the partition wall is spaced apart from the second side surface of the cooling plate, a passage through which the coolant circulates may be provided. Because the coolant that has a low temperature and is introduced through the coolant inlet does not mix with the coolant that has a high temperature and is circulated through the cooling plate, cooling by the cooling plate may be effectively achieved.

In one or more embodiments, the cooling plate may have a shape in the form of a narrow plate that is erected vertically. Through this configuration, in a case where the cooling plate is interposed between the cell stacks, the proportion of space occupied by the cooling plate within the secondary battery module may be minimized. In addition, by minimizing the proportion of space occupied by the cooling plate within the secondary battery module, the energy density of the secondary battery module may be improved.

In one or more embodiments, heat exchange between the battery cell and the cooling plate may be effectively achieved by the gap filler, and the cooling efficiency of the cooling plate may be improved.

In one or more embodiments, because opposite side surfaces of the cooling plate are formed in an embossed or uneven shape, the phenomenon that the gap filler applied on opposite side surfaces of the cooling plate flows down may be prevented. In addition, as opposite side surfaces of the cooling plate are formed in an embossing or uneven shape, the contact area between the battery cell and the cooling plate may be expanded, and thus, the cooling area and cooling efficiency of the cooling plate may be increased.

The preferred embodiments of the present disclosure have been disclosed for illustrative purposes, and it will be understood by those of ordinary skill in the art that various modifications, changes, and additions are possible within the scope of the present disclosure, and such modifications, changes, and additions should be considered to fall within the scope of the appended claims.

It will be understood by those of ordinary skill in the art that various substitutions, modifications, and changes can be made without departing from the technical scope of the present disclosure, and therefore, the present disclosure is not limited to the above-described embodiments and the attached drawings.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### DESCRIPTION OF SOME REFERENCE SYMBOLS

S: cell stack
10: secondary battery module
100: unit cell
110: cooling plate
112: coolant inlet
114: coolant outlet
120: front plate
130: end plate
140: top plate
150: bottom plate
160, 162: side plate

## Claims

1. A secondary battery module (10, 800), comprising:
at least two cell stacks (S, 810), each of the cell stacks (S, 810) comprising a plurality of unit cells (100), the plurality of unit cells (100) arranged along a first direction;
at least one cooling plate (110, 500, 820) interposed between the at least two cell stacks (S, 810); and
a housing configured to accommodate the at least two cell stacks (S, 810) and the cooling plate (110, 500, 820),
wherein the cooling plate (110, 500, 820) comprises a coolant inlet (112, 510) and a coolant outlet (114, 520) on a first side surface of the cooling plate (110, 500, 820).

2. The secondary battery module (10, 800) as claimed in claim 1, wherein the coolant inlet (112, 510) is above the coolant outlet (114, 520) on the first side surface of the cooling plate (110, 500, 820).

3. The secondary battery module (10, 800) as claimed in claim 1 or 2, wherein the cooling plate (110, 500, 820) further comprises a partition wall (116, 530) separating an inner space of the cooling plate (110, 500, 820).

4. The secondary battery module (10, 800) as claimed in claim 3, wherein one end of the partition wall (116, 530) is coupled to the first side surface of the cooling plate, and another end opposite to the one end of the partition wall (116, 530) is spaced apart from a second side surface of the cooling plate (110, 500, 820), the second side surface of the cooling plate (110, 500, 820) being opposite to the first side surface.

5. The secondary battery module (10, 800) as claimed in one of the preceding claims, wherein a third side surface of the cooling plate (110, 500, 820), which is perpendicular to the first side surface, and a fourth side surface of the cooling plate (110, 500, 820), which is perpendicular to the first side surface and opposite to the third side surface, each having an uneven shape.

6. The secondary battery module (10, 800) as claimed in claim 5, further comprising a gap filler (540) on the third side surface and the fourth side surface.

7. The secondary battery module (10, 800) as claimed in claim 6, wherein the gap filler (540) includes a heat-conductive material.

8. The secondary battery module (10, 800) as claimed in claim 7, wherein the heat-conductive material is an adhesive.

9. The secondary battery module (10, 800) as claimed in one of the preceding claims, wherein a size of a side surface area of each of the plurality of unit cells (100) is equal to or greater than a size of a bottom surface area of each of the plurality of unit cells (100).

10. The secondary battery module (10, 800) as claimed in one of the preceding claims, wherein each of the plurality of unit cells (100) comprises lithium iron phosphate.

11. The secondary battery module (10, 800) as claimed in one of the preceding claims, wherein the housing comprises:
an end plate (130) connected to the cooling plate (110, 500, 820), the end plate (130) supporting a first surface along a second direction crossing the first direction of the two cell stacks (S, 810); and
a front plate (120) connected to the cooling plate (110, 500, 820), the front plate (120) supporting a second surface opposite to the first surface of the two cell stacks (S, 810),
wherein each of the end plate (130) and the front plate (120) has a groove (122, 132) therein to accommodate at least a portion of the cooling plate (110, 500, 820).

12. The secondary battery module (10, 800) as claimed in claim 11, wherein the housing further comprises:
a top plate (140) connected to the cooling plate (110, 500, 820), the top plate (140) supporting a third surface along a third direction crossing the first direction of the two cell stacks (S,810); and
a bottom plate (150) connected to the cooling plate (110, 500, 820), the bottom plate (150) supporting a fourth surface opposite to the third surface of the two cell stacks (S, 810),
wherein each of the top plate (140) and the bottom plate (150) has a groove (142, 152) therein to accommodate at least a portion of the cooling plate (110, 500, 820).

13. The secondary battery module (10, 800) as claimed in one of the preceding claims, comprising:
two cell stacks (S), each of the two cell stacks (S) comprising a plurality of unit cells (100), the plurality of unit cells (100) arranged along a first direction;
a cooling plate (110, 500) interposed between the two adjacent cell stacks (S); and
a housing configured to accommodate the two cell stacks (S, 810) and the cooling plate (110, 500).

14. The secondary battery module (10, 800) as claimed in one of the preceding claims, wherein the cooling plate includes a plurality of partition walls, which divide an inner space of the cooling plate into two or more sub-spaces connected for through-flow.
